# EUROPÄISCHE PATENTANMELDUNG

(11) **EP 0 613 870 A1**
(43) Veröffentlichungstag der Anmeldung: **07.09.1994**
(21) Anmeldenummer: 93810687.9
(22) Anmeldetag: 28.09.1993
(51) Int. Cl.: C05F 9/00, C05F 11/00, C05F 9/02, C05F 11/06, C05G 3/00

(54) **Verfahren für die Wiederverwertung von wasserhaltigem pflanzlichem Material**

(30) Priorität: 04.03.1993 CH 642/93
(71) Anmelder: ANALYSA BODENBERATUNG + UMWELTTECHNIK AG, CH-3515 Oberdiessbach (CH)
(72) Erfinder: Habegger, Ernst, CH-3515 Oberdiessbach (CH)
(74) Vertreter: Roshardt, Werner Alfred, Dipl.-Phys.

(57) **Zusammenfassung**

Bei einem Verfahren für die Wiederverwertung von wasserhaltigem pflanzlichem Material (1) wird dieses vorzugsweise unter Zugabe von Wasser mit mechanischen Mitteln (16) zerkleinert und zellular aufgeschlossen. Zum zellularen Aufschliessen eignen sich insbesondere Lochscheiben-, Korundscheiben-, Zahnkolloid- oder Hammermühlen. Das erfindungsgemäss verarbeitete pflanzliche Material kann wahlweise zwischengespeichert oder unmittelbar in den Boden oder auf die Vegetationsdecke ein- resp. aufgebracht werden. Bei der Pflege von qualitativ hochstehenden Rasenflächen wird vorzugsweise das zellular aufgeschlossene Material zusätzlich filtriert oder in anderer Weise in Faserstoffanteil und Flüssiganteil aufgetrennt. Während der nährstoffreiche, wertvolle Flüssiganteil (Zellinhalt) auf die Rasenfläche verteilt wird, wird der Faserstoffanteil (Zellwände) in anderer Weise wiederverwertet. Das Verfahren kann mit stationären oder fahrbaren Vorrichtungen durchgeführt werden. Im letzteren Fall wird die Vorrichtung allein oder in Kombination mit einem Mäher eingesetzt, so dass das Rasenschnittgut in einem oder mehreren Arbeitsgängen geschnitten, zerkleinert, zellular aufgeschlossen und wieder ausgebracht werden kann.

## Beschreibung

### Technisches Gebiet

Die Erfindung betrifft ein verfahren für die Wiederverwertung von im wesentlichen holzfreiem wasserhaltigem pflanzlichem Material, insbesondere von Rasenschnittgut, Rüstabfällen und dergleichen. Ferner betrifft die Erfindung eine Anwendung und eine Vorrichtung zur Durchführung des Verfahrens.

### Stand der Technik

Die Vegetationsdecke belasteter Sportrasenflächen (Fussballplätze, Spielwiesen, Golfplätze usw.) besteht weitgehend aus einem reinen Gräserbestand. Die praktisch bei allen Sportarten geforderte hohe Strapazier- und Regenerationsfähigkeit setzt eine kräftige Blattmasse und ein entsprechend gut entwickeltes Wurzelwerk der Rasengräser voraus. Rasenflächen werden deshalb zwecks Förderung des Blatt- und Wurzelwachstums u. a. regelmässig gedüngt.

Entsprechend sportartspezifischer Anforderungen (Trittfestigkeit, Ballverhalten usw.) müssen Sportrasenflächen während der Vegetationszeit (März bis Oktober) regelmässig gemäht werden. Während einer Vegetationsperiode fallen daher beträchtliche Mengen an Rasenschnittgut an (Grünmasse 20'000 bis 50'000 kg/ha; Trockensubstanz 2'000 bis 5'000 kg/ha). Da einerseits die Rasenflächen gedüngt werden müssen und andererseits das Schnittgut selbst einen beträchtlichen Nährstoffgehalt besitzt, scheint es am einfachsten, das Schnittgut auf der Fläche liegenzulassen und damit sowohl das Problem der Entsorgung als auch der Düngung zu lösen. Dies ist zwar möglich bei weniger anspruchsvollen Sportrasenflächen mit biologisch aktiven Rasentragschichten. Auf stark sandigen Böden (z. B. Aufbauten nach DIN 18035, Teil 4 oder bei Greens) mit geringer biologischer Aktivität muss das Schnittgut aus sporttechnischen und pflanzenbaulichen Ueberlegungen jedoch entfernt werden.

Neben den offensichtlichen Vorteilen des Belassens des Schnittguts auf der Rasenfläche sind aber auch folgende Nachteile zu berücksichtigen:
a) Die unerwünschte Tätigkeit der Regenwürmer wird gefördert.
b) Die Anreicherung der Bodenoberfläche mit Grünmasse (Rohhumus) beeinträchtigt bei ungenügend rascher Mineralisierung die Wasserdurchlässigkeit bzw. den Wasser- und Lufthaushalt in der Rasentragschicht.
c) Die Verfilzung an der Basis der Gräser wird bei ungenügend rascher Mineralisierung von Blattmasse beschleunigt.
d) Zu grosse oder ungleichmässig auf der Fläche verteilte Grünmassen können die Rasengräser beschädigen (Fäulnis der zugedeckten Rasendecke).
e) Rasenschnittgut ist ein idealer Nährboden für Krankheitserreger (Pilzkrankheiten wie z. B. Fusarium ssp., Corticium fuciforme usw.). Das auf der Vegetationsdecke lastende Schnittgut begünstigt die Ausbreitung von Krankheiten an den gesunden Blättern der Rasengräser. Zwischen dem Schnittgut und der Bodenoberfläche entsteht häufig ein feuchtes Mikroklima, das die Uebertragung von Krankheiten von einem Blatt auf das andere begünstigt.

Wird also das Schnittgut vom Boden aufgenommen oder direkt vom Mäher gesammelt, dann muss es auf geeignete Weise entsorgt werden. Schnittgut enthält viel Wasser (in der Regel 90% und mehr) und leicht abbaubare Stärke und Cellulose sowie Stickstoffverbindungen (Aminosäuren, Amide, Eiweiss, Proteide, Chlorophyll usw.). Auf Lagerplätzen oder in Transportbehältern setzt bereits wenige Tage nach dem Schnitt ein intensiver Mineralisierungsprozess ein. Das stark wasserhaltige Material fällt zusammen und unter Anaerobie werden unangenehme Gerüche von Fäulnisprozessen freigesetzt. Als Folge aufgebrochener Zellwände kann stark mit organischen und mineralischen Stoffen belastetes Sickerwasser entstehen, das Boden und Wasser gefährdet. Rasenschnittgut ist deshalb innert Tagesfrist gesetzeskonform zu entsorgen (z. B. Rottedeponie) oder einer entsprechenden Wiederverwertung (z. B. Kompostierung) zuzuführen. Es sind folgende Entsorgungswege bekannt:

Deponieren des Schnittguts in bewilligten Deponien.

### Vorteile:

- Bequeme, aber heute aus ökologischen und wirtschaftlichen Gründen nicht mehr verantwortbare Entsorgungsart.

### Nachteile:

- Transportkosten zur Deponie;
- unnötige Beanspruchung von immer kleiner und teurer werdendem Deponieraum;
- Verlust an wertvoller organischer Substanz und an Pflanzennährstoffen;
- hohe Entsorgungskosten (Deponiegebühren).

Verbrennen des Schnittguts in Kehrichtverbrennungsanlagen (KVA).

### Vorteile:

- Bequeme, aber heute aus ökologischen und wirtschaftlichen Gründen nicht mehr verantwortbare Entsorgungsart.

### Nachteile:

- Transportkosten zur KVA;
- Bedarf an Fremdenergie zur Verbrennung;
- Verlust an wertvoller organischer Substanz und an Pflanzennährstoffen;
- hohe Entsorgungskosten (Gebühren sind in den letzten Jahren unaufhaltsam gestiegen).

### Kompostieren.

Das Kompostieren des Rasenschnittguts ist die heute am häufigsten angestrebte und praktizierte Behandlungsart. Als Folge des hohen Wassergehalts lässt sich Schnittgut nicht artrein, aerob kompostieren. Kurze Zeit nach dem Ansetzen des Komposthaufens setzt ein thermophiler Rotteprozess ein, bei welchem die leicht abbaubaren Zellwände rasch zerstört, das Zellplasma freigesetzt und dadurch grössere unerwünschte Sickerwassermengen entstehen. Das Material verliert rasch an Struktur, fällt in sich zusammen und vernässt. Unter Luftabschluss setzt rasch Fäulnis ein und unangenehme Gerüche werden frei. Die Kompostierung ist nur dann erfolgreich, wenn die Grünmasse unmittelbar nach dem Mähen mit grösseren Mengen an Strukturmaterial (z. B. Strauchschnitt, Baumrinde) vermischt wird. Für einen aeroben Rotteprozess müssen die Komposthaufen während einer längeren Zeit regelmässig umgeschichtet werden. Pflanzenverträglicher Reifkompost liegt je nach verwendetem Strukturmaterial (erst) nach einer Rottezeit von 8 bis 10 Monaten vor.

### Vorteile:

- Oekologisch sinnvolle Behandlungsart eines biogenen Abfalls.

### Nachteile:

- Transportkosten (Transport der Grünmasse zum Kompostierwerk und Transport des Kompostes vom Kompostierwerk an den Verwendungsort).
- Hohe Verfahrenskosten zur Herstellung von Kompost mit geringer Wertschöpfung. (Rasenschnittgut besteht zu über 90% aus Wasser).
- Hohe Anlage-, Maschinen- und Personalkosten für das Mischen des Schnittgutes mit Strukturmaterial, das teilweise überdachte Lagern des Kompostiergutes, das Umschichten und das Absieben des Reifkompostes.
- Unausgewogene Energiebilanz: Die für das Transportieren und Kompostieren von Schnittgut benötigte Fremdenergiemenge ist nachweisbar grösser als die Wertschöpfung für die im Reifkompost enthaltenen Humus- und Pflanzennährstoffe.
- Aus Rasenschnittgut und Strukturmaterial bestehender Kompost kann nicht in die Stoffkreisläufe einer Sportrasenfläche zurückgeführt werden.
- Für auf der Basis von Schnittgut hergestellte Komposte müssen entsprechende Absatzkanäle z. B. im Garten- und Landschaftsbau gesucht werden.

Vergärung von Schnittgut zusammen mit Klärschlamm unter Nutzung von Biogas.

### Vorteile:

- Oekologisch sinnvolle Wiederverwertungsart eines biogenen Abfalls.

### Nachteile:

- Transportkosten (Transport der Grünmasse zur Abwasserreinigungsanlage und Transport des Klärschlammes von der Abwasserreinigungsanlage an den Verwendungsort).
- Mit wenig Schadstoffen belastetes Schnittgut wird u. U. mit belastetem Klärschlamm vermischt.
- Klärschlamm kann nicht in die Stoffkreisläufe einer Sportrasenfläche zurückgeführt werden.
- Hohe Entsorgungskosten (ARA-Gebühren sind unaufhaltsam im Steigen begriffen).

Der heutige Stand bei der Entsorgung bzw. Wiederverwertung von Rasenschnittgut oder anderer biogener Abfälle wie z. B. Rüstabfälle (aus Grossküchen und Nahrungsmittelherstellung) wirft in der Praxis zusammenfassend folgende Probleme auf:
a) Die Lagerung und der Transport stark wasserhaltiger biogener Abfälle bereiten Probleme.
b) Praxisübliche Entsorgungs- bzw. Wiederverwertungsarten (Deponieren, Verbrennen, Kompostieren, Vergasen) sind entweder unwirtschaftlich oder ökologisch nicht vertretbar.
c) Das Aufnehmen und Abführen des Schnittgutes bedeutet die unerwünschte Oeffnung von (biologischen) Stoffkreisläufen.
d) Probleme bei der pflanzenbaulich sinnvollen und wirtschaftlichen Anwendung von Kompost- und/oder flüssigen Vergärungsendprodukten.

### Darstellung der Erfindung

Aufgabe der Erfindung ist es nun, ein Verfahren der eingangs genannten Art anzugeben, das die oben beschriebenen Probleme vermeidet und sich insbesondere bei der Pflege von hochkultivierten Rasenflächen einsetzen lässt.

Erfindungsgemäss besteht die Lösung darin, dass das pflanzliche Material mit mechanischen Mitteln zerkleinert und zellular aufgeschlossen wird.

Praktische Versuche haben gezeigt, dass sich Rasenschnittgut vorzugsweise im naturfeuchten Zustand oder unter Zugabe von Wasser mit Lochscheiben-, Korundscheiben-, Zahnkolloidmühlen und Hammermühlen in feinste Teile zerlegen lässt. Die stärke-, zellulose- und wasserreichen Pflanzenzellen werden praktisch vollständig zerstört unter Freigabe ihrer Inhaltsstoffe. Es entsteht eine breiige Biomasse. Das Volumen des zellular resp. kolloidal aufgeschlossenen Materials ist vier- bis fünfmal kleiner als dasjenige von frischer Grünmasse. Dieser vorteilhafte Volumenverlust macht kleinere Stapel- und Transportbehälter erforderlich.

Das Zerkleinern und zellulare Aufschliessen des pflanzlichen Materials (im folgenden auch kolloidales Aufschliessen genannt) hat zum Ziel, die Zellwände zu zerstören und den Zellinhalt austreten zu lassen. Indem das Material sehr stark zerkleinert wird, kann es später auf der Grünfläche fein verteilt oder in den Boden eingebracht werden.

Nicht in jedem Fall ist ein totaler zellularer (kolloidaler) Aufschluss des pflanzlichen Gewebes die optimale Lösung. Technischer oder wirtschaftliche Gründe können einen geringeren Zerkleinerungsgrad rechtfertigen (in diesem Zusammenhang sei auf die weiter unten beschriebenen mobilen Anlagen verwiesen). In diesem Sinne beschränkt sich die Erfindung nicht auf die Zerstörung des Pflanzenguts bis auf Kolloidgrösse. U. U. kann also auch eine Zerkleinerung mit teilweisem zellularem Aufschluss bis in den Millimeterbereich genügen.

Gemäss einer vorteilhaften Ausführungsform wird das zerkleinerte und zellular aufgeschlossene pflanzliche Material in seinen Flüssiganteil und seinen Faserstoffanteil aufgetrennt. Dies kann mit einer Filteranlage, insbesondere einer Filterbandpresse, einer Zentrifuge oder mit einer anderen geeigneten Separationsvorrichtung erzielt werden. Nachteile, die sich dadurch ergeben, dass das faserige Cellulosematerial an den Rasenblättern hängenbleibt, können auf diese Weise vermieden werden. Der im wesentlichen aus Zellwandmaterial bestehende Faserstoffanteil wird separat wiederverwertet.

Zerkleinertes und mehr oder weniger zellular aufgeschlossenes Rasenschnittgut kann als Düngemittel verwendet direkt auf der gemähten Rasenfläche fein verteilt resp. ausgespritzt oder in den Boden eingebracht werden. Dadurch lassen sich folgende Vorteile realisieren:
- Die Biomasse lässt sich problemlos fördern (mit Pumpen), dosieren (mit Dosierpumpen, Ventilen etc.) und in der gewünschten Menge auf den Boden verteilen oder in den Boden injizieren (mit geeigneten Scharen und/oder Spritzdüsen).
- Durch die Zerstörung der pflanzlichen Zellen werden das Zellplasma mit den darin enthaltenen Zellorganellen freigesetzt und die aus Cellulose bestehenden Zellwände zerkleinert. Durch eine grössere Oberfläche und den verbesserten Kontakt mit biologisch aktivem Bodenmaterial verläuft die Mineralisierung von organischen Stoffen deshalb rascher.
- In zellular aufgeschlossener und in den Boden injizierter Biomasse sind Pflanzennährstoffe rascher verfügbar.
- Einsparung von Handelsdünger und damit gleichzeitige Verminderung der Nitratbelastung.
- Keine visuellen und sportfunktionellen Nachteile durch Einbringen der zellular aufgschlossenen Biomasse in die Grasnarbe.

Zerkleinerte und zellular aufgeschlossene Biomasse lässt sich ferner problemlos in offenen und zwangsbelüfteten Behältern (ähnlich wie zwangsbelüftete Jauchegruben in der Landwirtschaft) ohne die Verursachung unangenehmer Geruchsemissionen über eine längere Zeit lagern. Eine Zwischenlagerung kann beispielsweise sinnvoll sein, wenn witterungsbedingt oder aus zeitlichen Gründen die zellular resp. kolloidal aufgeschlossene Biomasse nicht sofort nach dem Mähen des Rasens in den Boden eingebracht werden kann oder wenn kolloidal aufgeschlossene Biomasse einer Rasenfläche nicht auf derselben Fläche wieder ausgebracht werden darf (Golfgreens u. dgl.)

Gemäss einer bevorzugten Ausführungsform werden Düngstoffe oder Bodenverbesserungsmittel gezielt der zellular resp. kolloidal aufgeschlossenen Biomasse zugefügt, bevor sie ausgebracht wird. Das in die Stoffkreisläufe zurückgeführte Rasenschnittgut beispielsweise ist nicht zur Deckung des gesamten Nährstoffbedarfs von Rasenpflanzen ausreichend. Ein Teil der Pflanzennährstoffe wird zur Bildung von Wurzelmasse benötigt, kann in nicht mehr pflanzenverfügbaren Formen an Bodenteile (Ton-Humuskomplexe) fixiert werden oder wird ausgewaschen. Ein derartiges Nährstoffdefizit wird insbesondere bei der Pflege von Rasenflächen auf die beschriebene Weise kompensiert (Zugabe von Dünger etc.). Ein derartiges Aufwerten des Nährstoffgehalts der Biomasse ist natürlich nicht zwingend.

Die erfindungsgemäss zerkleinerte und kolloidal aufgeschlossene Biomasse ist sehr einfach handhabbar. Sie lässt sich pumpen oder blasen und mit einem Schlitzgerät (Fräse, Schlitzpflug usw.) und Dosierpumpen direkt in den Boden einspritzen oder auf der Rasenfläche verteilen. Es lassen sich damit alle Nachteile, die beim Belassen von (unbearbeitetem) Rasenschnittgut auf der Fläche entstehen, vermeiden. Die in direkten Bodenkontakt gebrachte kolloidal aufgeschlossene Biomasse wird durch Mikroorganismen beschleunigt mineralisiert und zwar ohne eine nennenswerte Beeinträchtigung des Pflanzenwachstums. Die Voraussetzungen dazu sind im Boden bedeutend besser als auf der Bodenoberfläche (Feuchtigkeit und höhere biologische Aktivität):
- Schliessung der Stoffkreisläufe, indem mineralisierte Nährstoffe wieder von der Pflanze aufgenommen werden können.
- Einsparung von Düngemitteln bis zu 90%.
- Das Verfahren lässt sich mit Hilfe von kleinen kompakten Anlagen durchführen, so dass Transportkosten, Gebühren (für das Deponieren, Verbrennen, Kompostieren, Vergasen) vollständig entfallen.

Bei weniger anspruchsvollen Grünflächen kann die kolloidal aufgeschlossene (oder ggf. nur stark zerkleinerte) Biomasse z. B. mit einem Sprühgerät, Druckfass (Jauchefass) oder speziellem Träufel- oder Verteilgerät direkt auf die Vegetationsdecke ausgebracht werden. Erfolgt das Ausbringen z. B. kurz vor Niederschlägen, werden die organischen Feinstbestandteile der Biomasse so in die Vegetationsdecke eingeschwemmt, wobei Nachteile, wie sie beim Belassen des Rasenschnittguts auf der Rasenfläche auftreten, vermieden werden. Im Gegensatz zu nicht aufgeschlossenem Rasenschnittgut, das auf der Vegetationsdecke zurückbleibt, hat die erfindungsgemässe Biomasse direkten Kontakt mit dem Bodenmaterial und wird deshalb beträchtlich schneller mineralisiert. Die erwähnte Ausbringungsart (mit Jauchefass etc.) ist natürlich ziemlich leistungsfähig und kostengünstig.

Das Abfallgut wird vorzugsweise vor dem kolloidalen Aufschliessen vorzugsweise im Wasserbad oder ganz allgemein im Reinigungsbad schwimmend von Fremdkörpern, Feststoffen, Steinen u. dgl. gereinigt. Auf diese Weise wird gleichzeitig die erforderliche Benetzung bewirkt. Anstelle von Wasser kann u. U. auch ein anderes geeignetes Medium verwendet werden. Dadurch kann z. B. der Trennungs- bzw. Reinigungsprozess gezielt beeinflusst werden.

Zur Verbesserung des Reinigungseffekts kann Wasser z. B. von nahe unterhalb der Wasseroberfläche durch eine Mehrzahl von (nach oben gerichteten) Düsen ins Wasserbad gepumpt werden. Auf diese Weise wird auch derjenige Teil des Wassers ersetzt, der zusammen mit dem benetzten Abfallgut entfernt worden ist. Die Wasseroberfläche wird durch das erfindungsgemässe Einpumpen verwirbelt. In einer vereinfachten Ausführung kann stattdessen Wasser von oben in das Wasserbad gelassen werden.

Je nachdem mit welchen Mitteln das pflanzliche Material zerkleinert und zellular aufgeschlossen wird, kann es vorteilhaft oder sogar zwingend sein, das zu zerkleinernde Material zu benetzen. Gemäss einer besonders bevorzugten Ausführungsform der Erfindung wird die erforderliche Flüssigkeitszugabe durch Rückführung eines Teils des beim Filtrieren resp. Zentrifugieren gewonnenen Filtrats resp. Zentrifugats bewirkt. So kann z. B. in einer mobilen Anlage ein Reinigungsbad mit relativ kleinem Flüssigkeits- bzw. Wasserspeicher vorgesehen sein, wobei die beim Benetzen des zellular aufzuschliessenden pflanzlichen Materials verlorene Reinigungsflüssigkeit (Wasser) durch eine entsprechende Menge des abgepressten resp. zentrifugierten Flüssiganteils der zellular aufgeschlossenen Biomasse ersetzt wird. Die Rückführung kann aber nicht nur in Verbindung mit einem Reinigungsbad, sondern ganz allgemein zur Befeuchtung des kolloidal aufzuschliessenden Materials benutzt werden (insbesondere zur Erleichterung des mechanischen Aufschlusses).

Wird das erfindungsgemässe Verfahren in einem an einem Mäher ansetzbaren Aggregat verwirklicht, um den geschnittenen Rasen sogleich aufzubereiten und wieder zu verstreuen, dann dürfte eine Abscheidung im Wasserbad u. U. zu aufwendig sein. Je nach Anwendungsfall wird man auf das Abscheiden von Fremdkörpern entweder ganz verzichten oder es durch ein geeignetes Trennverfahren, insbesondere eine Windsichtung realisieren. Auch auf die Benetzung kann dabei verzichtet werden.

Vorzugsweise wird das Verfahren zur Entsorgung bzw. Wiederverwertung von Rasenschnittgut und/oder ähnlichen pflanzlichen Küchenabfällen verwendet. Bei entsprechender Zugabe von Wasser (oder aus der Biomasse abgepresstem Flüssiganteil etc.) kann das Verfahren auch für angewelktes oder trockenes pflanzliches Material verwendet werden.

Nicht geeignet ist das Verfahren für stark verholzte, ligninreiche organische Substanzen (Holz, Baumrinde), wie sie z. B. zur Herstellung von porenreichen Bodenverbesserungsmitteln (Torfersatz) eingesetzt werden.

Der bevorzugte vollständige kolloidale Aufschluss des pflanzlichen Materials wird gemäss der Erfindung mit einer an sich bekannten Mühle durchgeführt. Bisher wurden sie für die Herstellung von kosmetischen oder pharmazeutischen Pasten, Verpulpung von Früchten (Aepfel, Kirschen, Bananen, Käse etc.), oder für die Zubereitung von Seifen, Pasten, Fetten usw. eingesetzt.

Eine Reduktion des Arbeitsaufwandes und der Anzahl Arbeitsgänge (indem z. B. in einem Arbeitsgang der Rasen gemäht, das Rasenschnittgut zellular aufgeschlossen und die Biomasse wieder auf dem Rasen verteilt wird) kann es rechtfertigen, einen nicht vollständigen Aufschluss des Pflanzenmaterials durchzuführen. Neben den besonders bevorzugten Mühlen können daher z. B. in Verbindung mit Spindelrasenmäher, Sichelrasenmäher, Kreiselmäher, Schlegelmäher etc. irgendwelche Zerkleinerungsgeräte eingesetzt werden, die schneiden, kuttern, passieren, reiben, pürieren, raspeln, schnitzeln etc.

Zur Reinigung im Wasserbad ist vorzugsweise ein Behälter mit einer darüber angeordneten Förderschnecke vorgesehen. Die Förderschnecke befördert das im Wasserbad schwimmende Material zur Mühle. Ueber der Förderschnecke ist z. B. eine Einfüllöffnung mit einem Trichter vorgesehen. Das Abfallgut wird in geeigneter Dosierung in den Trichter geleert. In der oberen Hälfte des Behälters kann zur Verbesserung der Reinigungswirkung ein mit nach oben gerichteten Düsen (Oeffnungen) versehenes Wasserzufuhrrohr vorgesehen sein.

Vorzugsweise ist ferner eine automatische Dosiervorrichtung vorgesehen. Diese besteht z. B. aus einem Materialaufnahmebunker mit einem an dessen Boden angeordneten Förderband. Es lässt sich dadurch eine kontinuierlich arbeitende Anlage erstellen.

Für eine allfällige Zwischenlagerung ist mit Vorteil ein zwangsbelüfteter Behälter vorgesehen. Die von der Mühle o. dgl. kolloidal aufgeschlossene Biomasse wird in diesem Behälter bis zur weiteren Verwertung gestapelt.

Die Anlage kann stationär oder mobil eingesetzt werden. Im letztgenannten Fall sind die verschiedenen Geräte vorzugsweise in einem Spezialfahrzeug kombiniert. Dieses Fahrzeug kann ev. unmittelbar zusammen mit einem Mäher mit Sammelvorrichtung eingesetzt werden. Es kann aber auch als selbständiges Fahrzeug den gemähten Rasen aufnehmen, zerkleinern und zellular aufschliessen und separiert oder unsepariert auf der nämlichen Rasenfläche wieder verteilen. Wird ein Filtrieren o. dgl. durchgeführt, dann kann - wie bereits erwähnt - ein Teil des Filtrats z. B. in das Reinigungsbad (Steineabscheider etc.) rückgeführt werden.

Eine besonders bevorzugte Ausführungsform umfasst somit einen Mäher zum Schneiden des Rasens, eine Auffang- resp. Sammelvorrichtung, welche das Rasenschnittgut unmittelbar aufnimmt, ev. einen Fremdstoffabscheider (insbesondere Windsichter) zum Eliminieren von Fremdstoffen, eine Zerkleinerungsvorrichtung, um das Rasenschnittgut soweit als möglich zellular aufzuschliessen und eine Verteilvorrichtung zum Ausstreuen resp. Ausspritzen der zellular aufgeschlossenen Biomasse.

Aus der Detailbeschreibung und der Gesamtheit der Patentansprüche ergeben sich weitere vorteilhafte Ausführungsformen und Merkmalskombinationen der Erfindung.

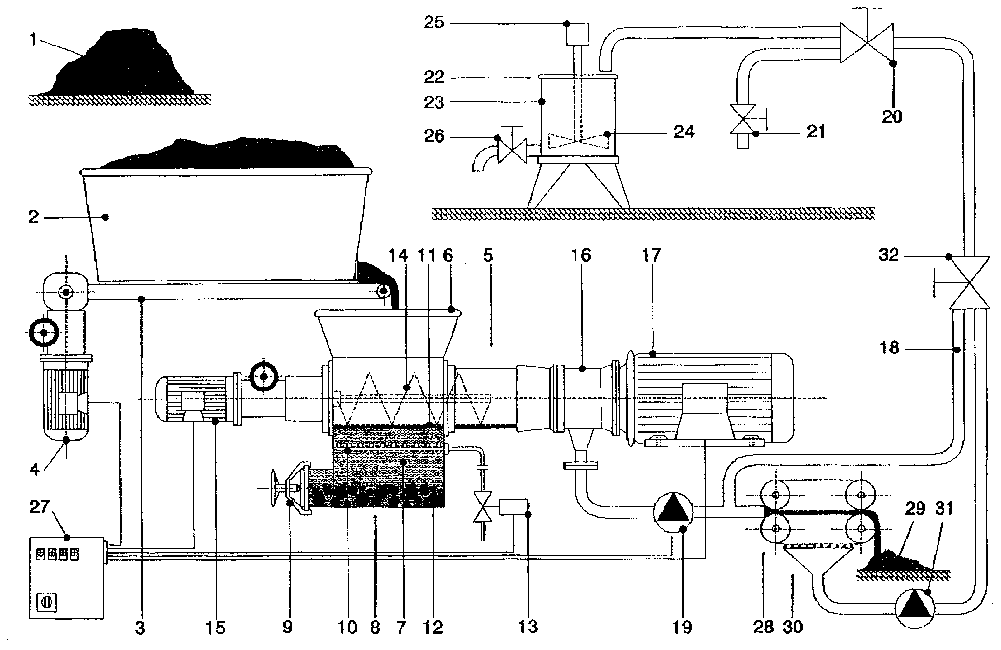

### Kurze Beschreibung der Zeichnung

Die einzige Figur zeigt schematisch eine Anlage zur Aufbereitung und Wiederverwertung von Rasenschnittgut und ähnlichen wasserhaltigen pflanzlichen Restmaterial.

### Wege zur Ausführung der Erfindung

Das durch Mähen eines Rasens entstandene Rasenschnittgut 1 wird in einen Materialaufnahmebunker 2 eingefüllt. Dieser weist an seinem Boden ein Dosierband 3 auf, das das Rasenschnittgut kontinuerlich abführt. Es wird von einem Antrieb 4 motorisch betätigt.

Das Dosierband 3 befördert das Rasenschnittgut in eine Mühlenbeschickungsanlage 5. Diese weist einen Behälter 8 mit einem Wasserbad 7, eine darüber horizontal angeordnete Förderschnecke 14 und eine über der Förderschnecke 14 angeordnete Oeffnung mit Trichter 6 auf. Das Schnittgut fällt an der Förderschnecke 14 vorbei ins Wasserbad 7 und wird von spezifisch schweren Verunreinigungen 12 getrennt. Letztere sammeln sich auf dem Boden des Behälters 8 und können periodisch durch eine Entleerungsöffnung 9 entfernt werden.

Die Förderschnecke 14 taucht teilweise in das Wasserbad 7 ein, so dass sie - durch einen Antrieb 15 in Rotation versetzt - das auf der Wasseroberfläche schwimmende Rasenschnittgut 11 zum Ausgang der Mühlenbeschickungsvorrichtung 5 und damit zu einer Kolloidmühle 16 befördern kann. Das aus dem Wasserbad 7 beförderte Schnittgut 11 ist zugleich in der für den kolloidalen Aufschluss erforderlichen Weise benetzt.

Mit einem im oberen Bereich des Behälters 8 horizontal installierten Rohr 10 wird kontinuierlich oder stossweise Wasser zugegeben. Die Steuerung der Wasserzugabe erfolgt mit Hilfe eines Motorventils 13. Das Rohr 10 weist eine Mehrzahl von nach oben gerichteten Düsen oder Löchern auf, die für eine Verwirbelung des oberflächennahen Wasserbereiches sorgen. Es versteht sich, dass die Verwirbelung nicht so stark sein darf, dass die spezifisch schwereren Teile nicht mehr auf den Boden sinken können.

Auf derselben geometrischen Achse wie die Förderschnecke 14 und ihr Antrieb 15 ist die Kolloidmühle 16 angeordnet. Sie zerkleinert resp. mahlt das nasse Schnittgut 11 bis zur Zerstörung der Zellstrukturen (kolloidaler Aufschluss). Es eignen sich dafür diverse an sich bekannte Mühlen:
- Zahnkolloidmühlen (Ein verzahnter Mahlsatz aus rostfreiem Chromnickelstahl zerkleinert das Material.)
- Lochscheibenmühlen (Dicht über einer Lochplatte rotiert mit hoher Geschwindigkeit ein z. B. vierschneidiger Messerbalken. Die oberen Messerklingen, die gegen einen ruhenden Nockenring arbeiten, zerkleinern das Schnittgut grob vor und drücken es durch die stillstehende Lochscheibe. Der unter der Lochscheibe rotierende Auswerferbalken saugt die kolloidal aufgeschlossene Biomasse aus der Schneidzone und fördert sie zum Mühlenausgang.)
- Korundscheibenmühlen (Das Abfallgut wird zwischen zwei keramisch gesinterten Korundscheiben in eine dünnflüssige bis pasteuse Biomasse im kontinuierlichen Arbeitsablauf auf eine Feinheit bis etwa 1 Mikron zerkleinert. Ein Rotormahlelement rotiert mit hoher Geschwindigkeit gegen das feststehende Statormahlelement. In dem von den beiden Korundscheiben gebildeten Spalt wird das Abfallgut mit hohen Scher-, Schneid- und Prallkräften kolloidal aufgeschlossen.)

Derartige Mühlen werden z. B. von der Firma FRYMA-Maschinen AG, CH-4310 Rheinfelden, Schweiz, vertrieben. Der Antrieb 17 der Kolloidmühle 16, der Antrieb 15 der Förderschnecke 14 und der Antrieb 4 des Dosierbandes 3 werden von einer gemeinsamen Steuerschaltung 27 in aufeinander abgestimmter Weise geregelt. Dies ebenso eine Pumpe 19, die die breiige und pumpfähige zellular aufgeschlossene Biomasse von der Kolloidmühle 16 an einen gewünschten Ort z. B. zu einer Verladestation 21 oder einem Zwischenspeicher 22 befördert (Leitung 18). In Abstimmung mit der verarbeiteten Menge ist auch die Wasserzufuhr für das Wasserbad 7 von der Steuerschaltung 27 via Motorventil 13 zu regeln.

Gemäss einer bevorzugten Ausführungsform ist am Ende der Leitung 18 ein Mehrweghahn 20 vorgesehen, damit die Biomasse wahlweise der Verladestation 21 oder dem Zwischenspeicher 22 zugeleitet werden kann.

Der Zwischenspeicher 22 umfasst einen offenen Behälter 23 und ein motorisch (Motor 25) betriebenes Rührwerk 24. Ueber einen Entleerungshahn 26 kann im Bedarfsfall Biomasse entnommen werden.

Durch das Rührwerk, ein Belüftungsgebläse o. dgl. wird vermieden, dass im offenen Behälter 23 anaerobe Gärungsprozesse entstehen (unangenehme Geruchsentwicklung).

Falls eine zusätzliche Ergänzung des Nährstoffgehalts der kolloidal aufgeschlossenen Biomasse erwünscht ist, oder falls irgendwelche Hilfsstoffe untergemischt werden sollen, kann dies entweder im Zwischenspeicher 22 oder erst im entsprechenden Aggregat vor dem Ausspritzen (z. B. im Tankfahrzeug oder im Verteilgerät) erfolgen.

Gemäss einer bevorzugten Ausführungsform ist stromabwärts zur Pumpe 19 eine Filterbandpresse 28 (an sich bekannter Bauart) vorgesehen. Diese presst aus der pumpfähigen Biomasse den Flüssiganteil, welcher in einem Filtratsammler 30 aufgefangen wird. Der Filterrückstand 29 wird ausgeschieden zwecks separater Wiederverwertung. Eine Pumpe 31 pumpt das Filtrat zum Zwischenspeicher 22. Ein Mehrweghahn 32 ermöglicht das Umschalten von nicht abgepresster Biomasse auf abgepresste. Das Trennen der Biomasse empfiehlt sich insbesondere bei der

Pflege von anspruchsvollen Sportrasen (z. B. Golfgreens). Auch dort soll nämlich das Rasenschnittgut wieder auf dieselbe Rasenfläche ausgebracht werden können.

Mit nicht filtierter Biomasse können sich nämlich folgende Probleme ergeben:
Wird zellular aufgeschlossenes Rasenschnittgut in flüssiger Form (Suspension) auf die gemähte Rasenfläche aufgespritzt, bleiben die Cellulosefasern (zerkleinertes, faseriges Zellwandmaterial) auf den Blättern als filzähnlicher Belag haften. Nur die Flüssigkeit (Zellplasma plus Zellinhaltstoffe plus Wasser) versickert praktisch unsichtbar in der Grasnarbe bzw. in der Bodenoberfläche. An den Blättern haftende Cellulosefasern machen den Rasen in feuchtem Zustand glitschig und verrotten mangels Bodenkontakt nur schlecht. Abgetrocknete Fasern bewirken einen gelben Farbaspekt der Grasnarbe und begünstigen die vermehrte Bildung von Rasenfilz.

Versuche haben gezeigt, dass sich die auf Rasenflächen störenden Cellulosefasern am einfachsten durch Filtrieren oder Zentrifugieren vom flüssigen Zellinhalt abtrennen lassen.

Die nach der Mühle 16 anfallende Biomasse wird somit kontinuierlich in zwei Stoffgruppen aufgeteilt. Das Filtrat bzw. Zentrifugat (welches die wertbestimmenden Pflanzennährstoffe N, P, K, Ca, Mg, Fe in verschiedenen Löslichkeitsstufen beinhaltet) des zellular aufgeschlossenen Rasenschnittguts kann im Gegensatz zu nicht separierter Biomasse mühelos mit einfachsten Sprühgeräten gleichmässig und ohne sichtbare Rückstände auf der Rasenfläche verteilt werden. Die im Zellplasma enthaltenen Eiweisse, Kohlehydrate, Fette, Salze, Vitamine, Hormone und verschiedenen anderen Verbindungen, gelangen in den Boden und werden dort von Mikroorganismen innerhalb weniger Stunden pflanzenverfügbar gemacht.

Die Wandsubstanz bei grünen Pflanzen bzw. der beim Filtrieren oder Zentrifugieren gewonnene Rückstand besteht aus Cellulose. Die Kohlenstoff-Wasserstoff-Sauerstoffverbindungen enthalten im Gegensatz zum Zellplasma keine für die Pflanzenernährung wertvollen Substanzen. Die Filterrückstände werden deshalb z. B. einer Kompostierung zugeführt. Während des Rotteprozesses zerfällt die organische Substanz in Kohlensäuregase (CO₂) und Wasser.

Abgepresstes bzw. zentrifugiertes Zellwandmaterial stellt verglichen mit unbehandeltem Rasenschnittgut einen Bruchteil des Ausgangsvolumens und -gewichtes dar. Die Materialmenge einer Sportrasenfläche lässt sich somit auf kleinstem Raum lagern oder transportieren und verursacht weder unerwünschtes Sickerwasser noch unangenehme Fäulnisgerüche.

Wie bereits mehrmals angedeutet, lässt sich das Verfahren nicht nur mit stationären, sondern auch mit mobilen Maschinen und Aggregaten durchführen. Letztere machen das Transportieren an einen zentralen Ort (für das zellulare Aufschliessen) und danach das erneute Rücktransportieren zwecks Ausbringen der Biomasse auf der Rasenfläche überflüssig. Das Rasenschnittgut kann dann nämlich in einem Arbeitsgang geschnitten, zerkleinert, zellular aufgeschlossen und ausgebracht werden.

Zu diesem Zweck ist eine Mähmaschine einer geeigneten Art (Spindelrasenmäher, Sichelrasenmäher, Kreiselmäher, Schlegelmäher etc.) mit einer Vorrichtung ausgerüstet, die das geschnittene Gras direkt von den Schneidwerkzeugen (z. B. Spindel) restlos auffängt. Zum Auffangen eignen sich Aspiratoren (Gebläse), Pick-ups, Förderbänder, Schnecken u. dgl. Derartige Vorrichtungen sind in verschiedensten Ausführungen bekannt.

Im Prinzip kann eine Fremdkörperabscheidung wie bei der stationären Ausführungsform durchgeführt werden. Das Mitführen eines Wassertanks macht das Spezialfahrzeug allerdings gross und schwer. Als Abscheider werden deshalb vorzugsweise Windsichter resp. Aspiratoren herangezogen. Bei Golfsgreens, die mit Spindelmäher geschnitten werden, ist der Fremdkörperanfall vernachlässigbar gering. Bei einer dafür einzusetzenden Gerätekombination kann deshalb auf einer Fremdkörperabscheidung insgesamt verzichtet werden. Es werden dann z. B. entsprechend robuste, auf Fremdkörper nicht anfällige Zerkleinerungsvorrichtungen zur Anwendung gebracht.

Soll bei der in der Figur gezeigten Ausführungsform ein Teil des Filtrats rückgeführt werden, so ist eine Rückführleitung vorzusehen, die nach der Pumpe 31 abzweigt und im Behälter 8 (Steineabscheider) mündet. Die Rückführung kann durch zeitweises Umschalten oder durch kontinuierliches Abzweigen eines Teilstroms des Filtrats erfolgen. Zur Dosierung des rückgeführten Flüssiganteils kann ein steuerbares Ventil vorgesehen sein, das in Abhängigkeit vom Flüssigkeitsspiegel im Reinigungsbad kontrolliert wird.

Entsprechend der Schnittgutaufnahme ab Schneidwerkzeug des Rasenmähers lässt sich die Zerkleinerungsvorrichtung mit Hilfe verschiedener Förderelemente mit Rasenschnittgut beschicken (z. B. Förderschnecke wie bei stationärer Ausführungsform oder Gebläse).

Für die Zerkleinerung des Rasenschnittguts kommen neben den bereits erwähnten Mühlen auch ganz allgemein Vorrichtungen zur Anwendung, bei welchen organische Substanz bzw. pflanzliche Gewebe und Zellmaterial in geeigneter Weise zerkleinert, zertrümmert, aufgeschlossen, aufgebrochen etc. werden können. Für das kontinuierliche zellulare Aufschliessen des Rasenschnittgutes bei Mähmaschinen sind daher rotierende Messerwellen mit Gegenschneiden, gegeneinanderlaufende Schneide- oder Reibewalzen sowie Aspiratoren, Gebläse u. dgl., die neben einer pneumatischen Materialförderung eine Materialzerkleinerung bewirken, als besonders vorteilhaft zu erachten.

Die Zerkleinerung des Rasenschnittguts ist mit oder ohne Wasser (resp. Biomassenfiltrat o. dgl.) denkbar.

Bei den hier zur Diskussion stehenden Aggregaten muss die Biomasse im gleichen Arbeitsgang wieder auf die gemähte Rasenfläche verteilt werden. Insbesondere ohne Zugabe von Wasser neigt das zerkleinerte Rasenschnittgut zur Klumpenbildung. Es ist deshalb von entscheidender Bedeutung, dass die Biomasse möglichst fein verteilt auf oder in den Boden gebracht werden kann. Liegt eine flüssige oder pumpfähige Biomasse vor, kann diese mittels Sprüh- oder Spritzdüsen sowie Träufelsystem verteilt werden. Wird Rasenschnittgut ohne Zugabe von Wasser zerkleinert, entsteht eine breiige Masse mit relativ hoher Konsistenz, die sich nicht mehr pumpen und in flüssiger Form versprühen lässt. Vorzugsweise wird deshalb mit rotierenden Auflösern (z. B. mit Zähnen bestückte Welle) und/oder mit Gebläsen für die Materialzerstäubung gearbeitet.

Die beschriebenen Maschinen und Geräte können mit elektrischer Energie ab Netz oder Generator, sowie mit Verbrennungsmotoren und Hydraulikmotoren angetrieben werden. Letzteres ist insbesondere dann von Interesse, wenn die Geräte integrierte Teile eines Spezialfahrzeuges für die mobile Verwendung bilden. Dosiereinrichtung, Fremdkörperabscheidung und Mühlenbeschickung können leistungsabhängig von der Mühle automatisch gesteuert werden.

Die Erfindung beschränkt sich natürlich nicht auf das beschriebene Ausführungsbeispiel.

Die Mühlenbeschickungsvorrichtung braucht insbesondere nicht axial vor der Mühle angeordnet zu sein.

Die Fremdkörperreinigung kann in anderer Weise erfolgen oder ganz weggelassen werden. Auch die Dosierung mittels Dosierband stellt nur eine von vielen Möglichkeiten dar.

Anstelle von mehreren Einzelmotoren kann auch ein einziger Motor, an welchem die anzutreibenden Geräte über geeignete Getriebe angehängt sind, vorgesehen sein. Dies ist z. B. dann von Vorteil, wenn die Geräte auf einem Lastfahrzeug fest installiert sind oder Teil eines Spezialanhängers bilden.

Gemäss einer besonders bevorzugten Ausführungsform wird die kolloidal aufgeschlossene und gegebenenfalls nährstoffmässig ergänzte Biomasse direkt in den (geschlitzten oder geritzten) Boden eingebracht. Das zu diesem Zweck erforderliche Ritzen oder Schlitzen des Bodens erfolgt vorzugsweise mit einem Gerät, wie es in der EP- 0 466 658 beschrieben ist.

Die Erfindung wurde anhand der Wiederverwertung von Rasenschnittgut für Sportrasenflächen beschrieben. Die Erfindung beschränkt sich natürlich nicht auf diese besonders bevorzugte Anwendung. So gibt es weitere Einsatzmöglichkeiten in der landwirtschaftlichen, gemüsebaulichen, kommunalen, gewerblichen und/oder industriellen Wiederverwertung biogener Abfallstoffe.

Vielen Gemeinden bereitet zur Zeit die Entsorgung von Kü-chenabfällen grosse technische und wirtschaftliche Probleme. Beim Handling bzw. bei der ökologisch und wirtschaftlich sinnvollen Wiederverwertung von Küchenabfällen treten grundsätzlich die gleichen Probleme wie beim Rasenschnittgut auf. Mit dem erfindungsgemässen Verfahren verarbeitete Küchenabfälle lassen sich wie kolloidal aufgeschlossenes Rasenschnittgut verwenden. Neben den bereits weiter oben genannten Vorteilen der Erfindung ist hervorzuheben, dass kolloidal aufgeschlossene Küchenabfälle auch während der Kulturzeit, z. B. in die Reihen von Mais-, Zuckerrüben- und Gemüsekulturen ohne die Beeinträchtigung der Pflanzenwachstums in den Boden eingebracht werden können. Eine kostspielige Zwischenlagerung, wie dies beim Kompost der Fall ist, entfällt weitgehend.

Küchenabfälle sind in der Regel unansehnlich. Darin enthaltene Bestandteile werden durch das erfindungsgemässe Verfahren bis zur Unkenntlichkeit zerkleinert, was für den Anwender von grossem Vorteil ist.

Ebenfalls lassen sich mit der Erfindung stark wasserhaltige, biogene Abfälle, ähnlich dem Rasenschnittgut, aus der Landwirtschaft (z. B. Ernterückstände) und dem Gemüseanbau (z. B. Rüstabfälle) sowie aus Gewerbe und Industrie (z. B. Nahrungsmittelindustrie, Gastronomie) verarbeiten.

Die entlang von Strassen und Autobahnen anfallende Grünmasse ist mit Schadstoffen (z. B. Blei) stark belastet, weshalb ihre Entsorgung bzw. Wiederverwertung als Grün- oder Trockenfutter höchst problematisch ist. Die Pflege von Grünstreifen, Böschungen usw. ist zudem sehr kostspielig bzw. unwirtschaftlich und ökologisch fragwürdig. Das Erntegut muss mit grossem maschinellen und personellen Aufwand gemäht, aufgeladen, abgeführt und deponiert werden.

Erntegut von Strassenrändern, Böschungen u. dgl. lässt sich gemäss der Erfindung am Ort der Entstehung wirtschaftlich und ökologisch sinnvoll in die Stoffkreisläufe von Grünflächen aller Art zurückführen, indem kolloidal aufbereitete Grünmasse direkt auf die gemähten Grünflächen verteilt wird, ohne die Beeinträchtigung der Pflanzenwachstums.

Zusammenfassend kann festgehalten werden, dass durch die Erfindung ein völlig neuartiges, ökologisch und ökonomisch vorteilhaftes Verfahren zur Entsorgung resp. Wiederverwertung von wasserhaltigen Grünabfällen geschaffen worden ist.

### Bezugszeichenliste

- 1: Rasenschnittgut
- 2: Materialaufnahmebunker
- 3: Dosierband
- 4: Antrieb
- 5: Mühlenbeschickungsvorrichtung
- 6: Trichter
- 7: Wasserbad
- 8: Behälter
- 9: Entleerungsöffnung
- 10: Rohr
- 11: Schnittgut
- 12: Verunreinigungen
- 13: Motorventil
- 14: Förderschnecke
- 15: Antrieb
- 16: Kolloidmühle
- 17: Antrieb
- 18: Leitung
- 19: Pumpe
- 20: Mehrweghahn
- 21: Verladestation
- 22: Zwischenspeicher
- 23: Behälter
- 24: Rührwerk
- 25: Motor
- 26: Entleerungshahn
- 27: Steuerschaltung
- 28: Filterbandpresse
- 29: Filterrückstand
- 30: Filtratsammler
- 31: Pumpe
- 32: Mehrweghahn

## Patentansprüche

1. Verfahren für die Wiederverwertung von im wesentlichen holzfreiem, wasserhaltigem pflanzlichem Material, dadurch gekennzeichnet, dass das Material (1) mit mechanischen Mitteln (16) zerkleinert und zellular aufgeschlossen wird.

2. Verfahren nach Anspruch 1, dadurch gekennzeichnet, dass das zerkleinerte und zellular aufgeschlossene pflanzliche Material in Flüssiganteil und Faserstoffanteil aufgetrennt wird.

3. Verfahren nach Anspruch 1 oder 2, dadurch gekennzeichnet, dass als mechanische Mittel (16) Lochscheiben-, Korundscheiben-, Zahnkolloid- oder Hammermühlen eingesetzt werden.

4. Verfahren nach einem der Ansprüche 1 bis 3, dadurch gekennzeichnet, dass das pflanzliche Material (1) vorgängig im Reinigungsbad (7) schwimmend gereinigt wird, wodurch gleichzeitig eine Zugabe von Flüssigkeit bewirkt wird.

5. Verfahren nach Anspruch 4, dadurch gekennzeichnet, dass zur Verbesserung des Reinigungseffektes Flüssigkeit von nahe unterhalb der Oberfläche durch eine Mehrzahl von Düsen ins Reinigungsbad (7) gebracht wird.

6. Vorrichtung nach einem der Ansprüche 2 bis 5, dadurch gekennzeichnet, dass zumindest ein Teil des abgetrennten Flüssiganteils als Flüssigkeitszugabe zum zellular aufzuschliessenden pflanzlichen Material zurückgeführt wird.

7. Verfahren nach einem der Ansprüche 1 bis 6, dadurch gekennzeichnet, dass nach dem zellularen Aufschliessen Hilfsstoffe, insbesondere Dünger und Bodenverbesserungsmittel zugemischt werden.

8. Verfahren nach einem der Ansprüche 1 bis 6, dadurch gekennzeichnet, dass das kolloidal aufgeschlossene Material unmittelbar in den Boden eingebracht wird.

9. Anwendung des Verfahrens nach einem der Ansprüche 1 bis 8 zur Entsorgung bzw. Wiederverwertung von Rasenschnittgut und/oder pflanzlichen Küchenabfällen.

10. Anwendung des Verfahrens nach einem der Ansprüche 1 bis 8 auf die Pflege von Rasenflächen, wobei als pflanzliches Material Rasenschnittgut der Rasenfläche verwendet wird und die daraus hergestellte Biomasse zumindest teilweise wieder auf dieselbe Rasenfläche ausgebracht wird.

11. Vorrichtung zur Durchführung des Verfahrens nach Anspruch 1, gekennzeichnet durch eine Mühle (16) für das Zerkleinern und zellulare Aufschliessen des pflanzlichen Materials (1).

12. Vorrichtung zur Durchführung des Verfahrens nach Anspruch 1, insbesondere nach Anspruch 10, gekennzeichnet durch eine Beschickungsvorrichtung mit einem Behälter (8) für das Reinigungsbad (7) und einer über dem Behälter (8) angeordneten Förderschnecke (14) zur Beförderung des im Reinigungsbad (7) schwimmenden pflanzlichen Materials (11).

13. Vorrichtung nach Anspruch 12, gekennzeichnet durch eine über der Förderschnecke (14) angeordnete, insbesondere mit einem Trichter (6) versehene Einfüllöffnung.

14. Vorrichtung nach Anspruch 12 oder 13, gekennzeichnet durch ein mit nach oben gerichteten Düsen versehenes Flüssigkeitszufuhrrohr (10), welches im oberen Bereich, vorzugsweise auf mindestens halber Höhe angeordnet ist.

15. Vorrichtung nach einem der Ansprüche 11 bis 14, gekennzeichnet durch einen Materialaufnahmebunker (2) mit einem Dosierband (3) zum dosierten Zugeben des Materials (1) in das Reinigungsbad (7).

16. Vorrichtung nach einem der Ansprüche 11 bis 15, gekennzeichnet durch einen zwangsbelüfteten Behälter (22) zum Zwischenspeichern des aufbereiteten Materials.

17. Vorrichtung nach einem der Ansprüche 11 bis 16, gekennzeichnet durch Mittel zum Separieren des zerkleinerten und zellular aufgeschlossenen pflanzlichen Materials in Flüssiganteil und Cellulosefaseranteil.

18. Vorrichtung nach Anspruch 17, dadurch gekennzeichnet, dass eine Rückführleitung vorgesehen ist, um zumindest einen Teil des separierten Flüssiganteils zum zellular aufzuschliessenden pflanzlichen Material zurückzuführen.

19. Fahrbare Vorrichtung zur Durchführung der Anwendung nach Anspruch 10, vorzugsweise mit einem Mäher zum Schneiden des Rasens, mit einer Auffang- bzw. Sammelvorrichtung zum Auffangen bzw. Sammeln des Rasenschnittguts, mit einer Zerkleinerungsvorrichtung zur Durchführung eines zumindest teilweisen zellularen Aufschlusses und vorzugsweise mit einer Verteilvorrichtung zum Ausbringen des zellular aufgeschlossenen Rasenschnittguts auf der Rasenfläche.

20. Vorrichtung nach Anspruch 19 mit einem Fremdstoffabscheider insbesondere einem Windsichter zum Eliminieren von Fremdstoffen vor dem Zerkleinern des Rasenschnittguts.
